# EUROPEAN PATENT APPLICATION

(11) **EP 2 645 217 A1**
(43) Date of publication of application: **02.10.2013**
(21) Application number: 11855146.4
(22) Date of filing: 07.12.2011
(51) Int. Cl.: G06F 3/048, H04M 1/00

(54) **INFORMATION PROCESSING TERMINAL AND CONTROL METHOD FOR SAME**

(30) Priority: 05.01.2011 JP 2011000829
(71) Applicant: NEC Corporation, Tokyo 108-8001 (JP)
(72) Inventor: HONDA, Kotaro, Tokyo 108-8001 (JP)
(74) Representative: Vossius & Partner
(86) International application number: PCT/JP2011/078261
(87) International publication number: WO 2012/093540

(57) **Abstract**

A technology that realizes a browser that is highly convenient for information processing terminals provided with a plurality of displays is provided. An information processing terminal includes a display section and a control section. The display section has a plurality of displays. The control section causes a first browser screen to appear on a first display of said display section and, if the first browser screen is locked and an operation is performed on the first browser screen, causes a second browser screen to appear on a second display of said display section.

## Description

### TECHNICAL FIELD

The present invention relates to an information processing terminal provided with a plurality of touch panels.

### BACKGROUND ART

Some information processing terminals such as portable telephones, smartphones, portable information terminals, and personal computers are provided with two displays. Many information processing terminals are provided with a browser that allows the users to browse web pages over a network such as the Internet.

In addition, to compensate for shortcomings of portable information processing terminals having a small screen, browsers that function and operate and that correspond to the portable information processing terminals have been proposed (refer to Patent Literature 1). The technology disclosed in Patent Literature 1 features improvement of convenience for users who open a new web page and return to the link source web page. The portable information terminal described in Patent Literature 1 obtains page information of the link destination web page, develops the obtained page information on a virtual screen, and causes a part thereof to appear on a temporary screen that is open in the neighborhood of a link object so as to easily move to the link destination web page.

### RELATED ART LITERATURE

### PATENT LITERATURE

Patent Literature 1: JP2010-237776A, Publication

### SUMMARY OF THE INVENTION

### PROBLEM TO BE SOLVED BY THE INVENTION

However, since the technology described in Patent Literature 1 does not consider information processing terminals that are provided with a plurality of displays, it cannot be said that this technology effectively uses a plurality of displays.

An object of the present invention is to provide a technology that realizes a browser that is highly convenient for information processing terminals provided with a plurality of displays.

### MEANS THAT SOLVE THE PROBLEM

To realize the foregoing object, an information processing terminal according to the present invention includes a display section that has a plurality of displays; and a control section that causes a first browser screen to appear on a first display of said display section and, if the first browser screen is locked and an operation is performed on the first browser screen, causes a second browser screen to appear on a second display of said display section.

In addition, a control method according to the present invention is a control method of an information processing terminal having a plurality of displays, including causing a first browser screen to appear on a first display; and if the first browser screen is locked and an operation is performed on the first browser screen, causing a second browser screen to appear on a second display.

### EFFECT OF THE INVENTION

According to the present invention, a browser that is highly convenient for information processing terminals that are provided with a plurality of displays can be ralized.

### BRIEF DESCRIPTION OF DRAWINGS

Fig. 1 is a front view showing an information processing terminal according to a first embodiment of the present invention.
Fig. 2 is a block diagram showing a functional structure of the information processing terminal according to the first embodiment.
Fig. 3 is a schematic diagram showing an example of a browser screen that appears on a display in a one-screen display mode.
Fig. 4 is a schematic diagram showing an example of a browser screen that appears on a display in a two-screen display mode.
Fig. 5 is a schematic diagram showing another example of a browser screen that appears on a display in the two-screen display mode.
Fig. 6 is a schematic diagram showing an example of a browser screen that appears on a display in a full-screen display mode.
Fig. 7 is a schematic diagram describing an example of an operation of an information processing device.
Fig. 8 is a schematic diagram describing an example of an operation of an information processing device.
Fig. 9 is a schematic diagram describing an example of an operation of an information processing device.
Fig. 10 is a schematic diagram describing an example of an operation of an information processing device.
Fig. 11A is a schematic diagram showing a screen lock switch that appears when a browser screen has been locked.
Fig. 11B is a schematic diagram showing a screen lock switch that appears when a browser screen has not been locked.
Fig. 12 is a schematic diagram describing a structure and an operation of an information processing terminal according to a second embodiment of the present invention.

### BEST MODES THAT CARRY OUT THE INVENTION

Next, with reference to the accompanying drawings, embodiments of the present invention will be described. In the following description, similar structures having similar functions are denoted by similar reference numerals and their description will be omitted.

With reference to the accompanying drawings, embodiments of the present invention will be described in detail.

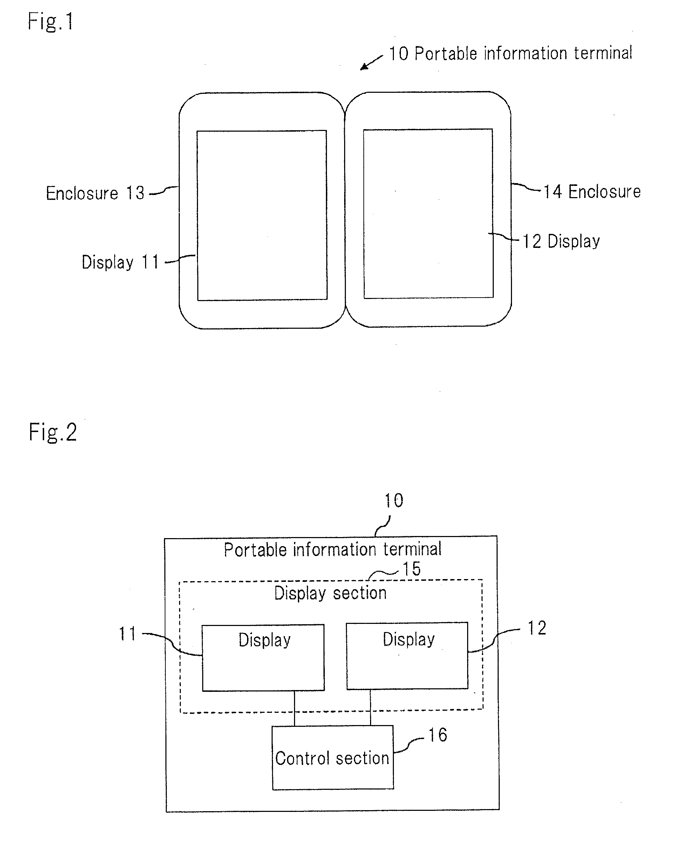

Fig. 1 is a front view showing an information processing terminal according to a first embodiment of the present invention. Information processing terminal 10 according to this embodiment is, for example, a portable information terminal provided with a communication function. Information processing terminal 10 is composed of two enclosures 13 and 14 that are openably and closably connected. Enclosures 13 and 14 are respectively provided with displays 11 and 12. When enclosures 13 and 14 are opened, display surfaces of displays 11 and 12 are located in the same direction such that they simultaneously enter the user's field of vision.

Fig. 2 is a block diagram showing a functional structure of the information processing terminal according to the first embodiment, Referring to Fig. 2, information processing terminal 10 has display section 15 and control section 16. Display section 15 has displays 11 and 12.

Displays 11 and 12 are touch-panel type display and input units each having a screen display function and a touch operation detection function that detects a touch operation that the user performs with his or her finger or a pen. Control section 16 causes screens to appear on displays 11 and 12. Displays 11 and 12 notify control section 16 of touch input information that represents the positions that the user is touching under the control of control section 16.

Control section 16 executes a process as the user operates displays 11 and 12 and causes screens corresponding to the process to appear on displays 11 and 12. Control section 16 has a browser function that causes browser screens such as web pages to appear on displays 11 and 12 as the user operate them.

Displays 11 and 12 have a plurality of display modes for browser screens including a one-screen display mode, a full-screen display mode, and a two-screen display mode.

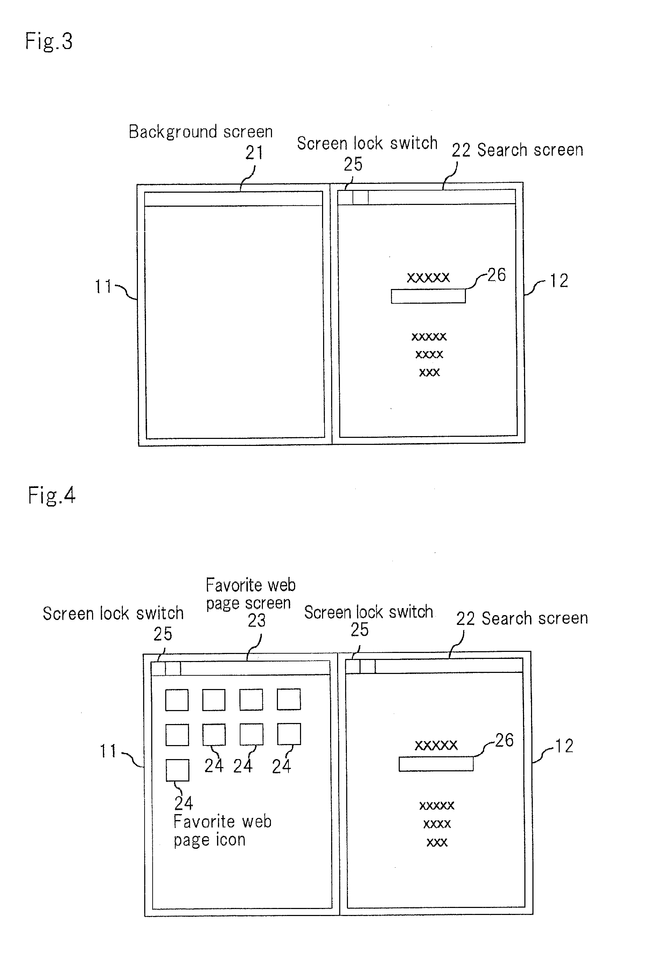

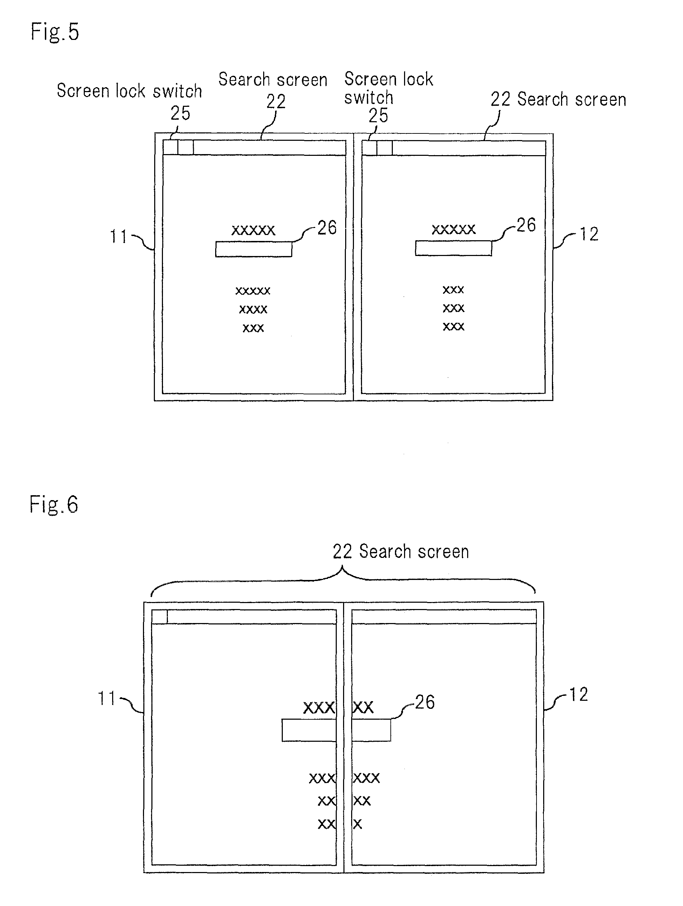

Fig. 3 shows an example of a browser screen that appears on a display in the one-screen display mode; Fig. 4 shows an example of a browser screen that appears on a display in the two-screen display mode; Fig. 5 shows another example of a browser screen that appears on a display in the two-screen display mode; and Fig. 6 shows an example of a browser screen that appears on a display in the full-screen display mode. In Fig. 3 to Fig. 6, display 11 is shown on the left, whereas display 12 is shown on the right.

The one-screen display mode is a display mode in which a browser screen appears on one of the two displays. In the example of the one-screen display mode shown in Fig. 3, search screen 22 appears on right-hand display 12, whereas background screen 21 as an example of a non-browser screen appears on left-hand display 11. Search screen 22 is one of the browser screens. A tool bar that appears on search screen 22 shown in Fig. 3 contains screen lock switch 25. Screen lock switch 25 is a switch that serves to lock and unlock a browser screen. If search screen 22 that appears on display 12 is locked, another browser screen is prevented from appearing on display 22 where search screen 22 appears. A new browser screen appears on the other display. In the one-screen display mode, the locked browser screen always appears and the user can operate the locked browser screen. Thus, the user can quickly see and operate the locked browser screen. In this context, locking of the browser screen does not mean that the browser screen cannot be moved on the display. Instead, the browser screen may be scrolled and the browser screen that appears at part of the display may be moved thereon.

The two-screen display mode is a display mode in which browser screens appear on displays 11 and 12, respectively. The two-screen display mode also includes two display modes.

In the first two-screen display mode, a web page or a search screen appears on one display, whereas favorite web page icons appear on the other display. In the example of the first two-screen display mode shown in Fig. 4, favorite web page screen 23 that contains favorite web page icons 24 that specify favorite web pages appears on display 11, whereas search screen 22 appears on display 12. Favorite web page screen 23 is one of the browser screens.

The second two-screen display mode is a display mode in which web page screens or search screens appear on both the displays. In the example of the second two-screen display mode shown in Fig. 5, search screens 22 appear on displays 11 and 12, respectively.

A tool bar that appears on each of favorite web page screen 23 shown in Fig. 4 and search screen 22 shown in Fig. 4 and 5 contains screen lock switch 25.

The full-screen display mode is a display mode in which one browser screen appears wholly on displays 11 and 12. In the example of the full-screen display mode shown in Fig. 6, one search screen 22 appears wholly on displays 11 and 12. The tool bar that appears on search screen 22 shown in Fig. 6 does not contain screen lock switch 25. This means that a browser screen cannot be locked in the full-screen display mode.

Display modes may be switched one after the other by a tap operation on a screen. Alternatively, display modes may be switched by a menu operation.

If a browser screen that appears on one display (for example, display 11) has been locked and an operation is performed on the browser screen, control section 16 causes another browser screen to appear on the other display (for example, display 12).

While a browser screen that appears, for example, on display 11 has been locked and a browser screen does not appear on display 12, if an operation is performed on the browser screen that appears on display 11, control section 16 causes a new browser screen to appear on display 12. On the other hand, while a browser screen that appears on one display 11 has been locked and a browser screen that appears on display 12 has not been locked, if an operation is performed on the browser screen that appears on display 12, control section 16 causes the browser screen that appears on display 12 to be switched to a new browser screen. Thus, in the one-screen display mode or two-screen display mode, a browser screen can be locked.

On the other hand, while one browser screen that appears wholly on both displays 11 and 12, namely in the full-screen display mode, control section 16 does not cause the browser screen to be locked.

In addition, control section 16 does not cause browser screens that appear on two displays 11 and 12 to be simultaneously locked. In other words, in the two-screen display mode, control section 16 does not cause browser screens that appear on both displays 11 and 12 to be simultaneously locked. For example, while a browser screen that appears on one display (in this example, display 11) has been locked, if a browser screen that appears on the other display (in this example, display 12) is caused to be locked, control section 16 causes the browser screen that appears on display 11 to be unlocked and the browser screen that appears on display 12 to be locked.

Next, an example of an operation of the information processing terminal according to this embodiment will be described.

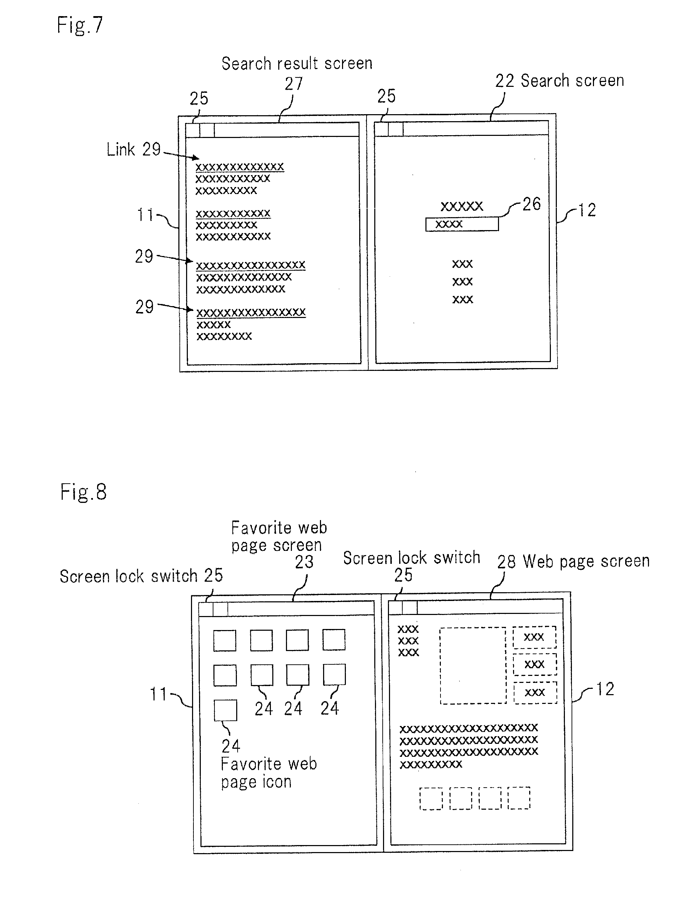

For example, in Fig. 3, while background screen 21 appears on display 11 and search screen 22 that appears on display 12 has been locked, if the user inputs any word such as a keyword in input area 26 and makes a search with it, search result screen 27 appears on display 11 as shown in Fig. 7. At this point, the display mode has been changed from the one-screen display mode to the second two-screen display mode. If the user further makes a search with another word in input area 26, new search result screen 27 appears on display 11.

On the other hand, while favorite web page screen 23 that appears on display 11 has not been locked and search screen 22 that appears on display 12 has been locked, if the user inputs any word in input area 26 and makes a search with it, search result screen 27 appears on display 11 as shown in Fig. 7. If the user further makes a search with another word in input area 26, new search result screen 27 appears on display 11.

On the other hand, while search screen 22 that appears on display 12 has been locked and search screen 22 that appears on display 11 has not been locked as shown in Fig. 5, if the user inputs any word in input area 26 on search screen 22 and makes a search with it, search result screen 27 appears on display 11 as shown in Fig. 7. If the user further inputs another word in input area 26 of search screen 22 on display 12 and makes a search with it, new search result screen 27 appears on display 11.

As described above, Fig. 7 shows that search screen 22 that appears on display 12 has been locked and search result screen 27 that appears on display 11 has not been locked. If search result screen 27 that has not been locked is locked, search screen 22 that has been locked is unlocked. If the user touches any link 29 that appears on search result screen 27, web page screen 28 that corresponds to link 29 that the user has touched appears on display 12.

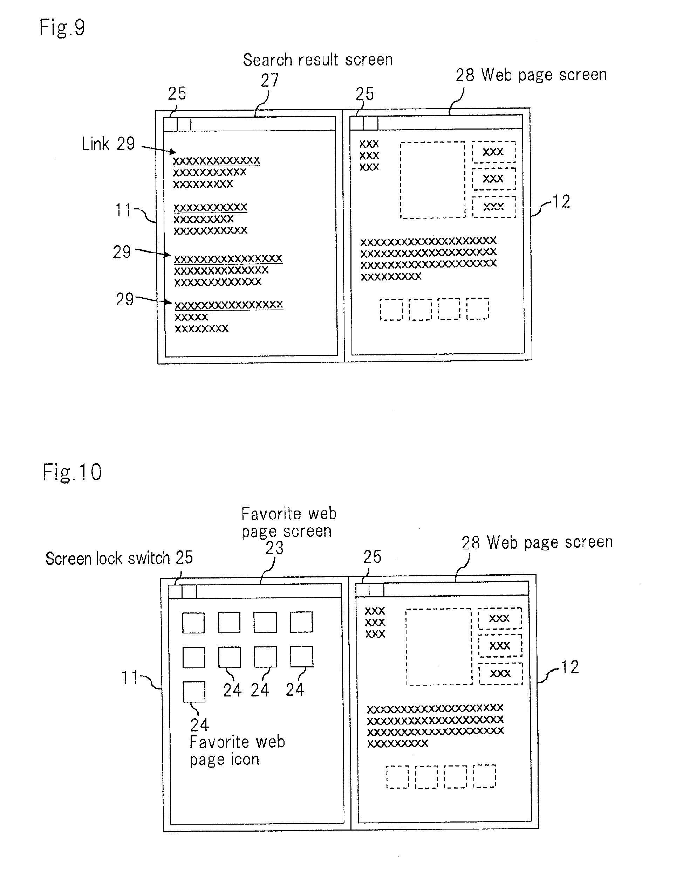

On the other hand, while favorite web page screen 23 that appears on display 11 has been locked and search screen 22 that appears on display 12 has not been locked, as shown in Fig. 4, if the user touches any favorite web page icon 24, web page screen 28 that corresponds to favorite web page icon 24 that the user has touched appears on display 12 as shown in Fig. 10.

On the other hand, while one search screen 22 appears wholly on displays 11 and 12 as shown in Fig. 6, if the user inputs any word in input area 26 on search screen 22 and makes a search with it, a search result screen appears wholly on displays 11 and 12.

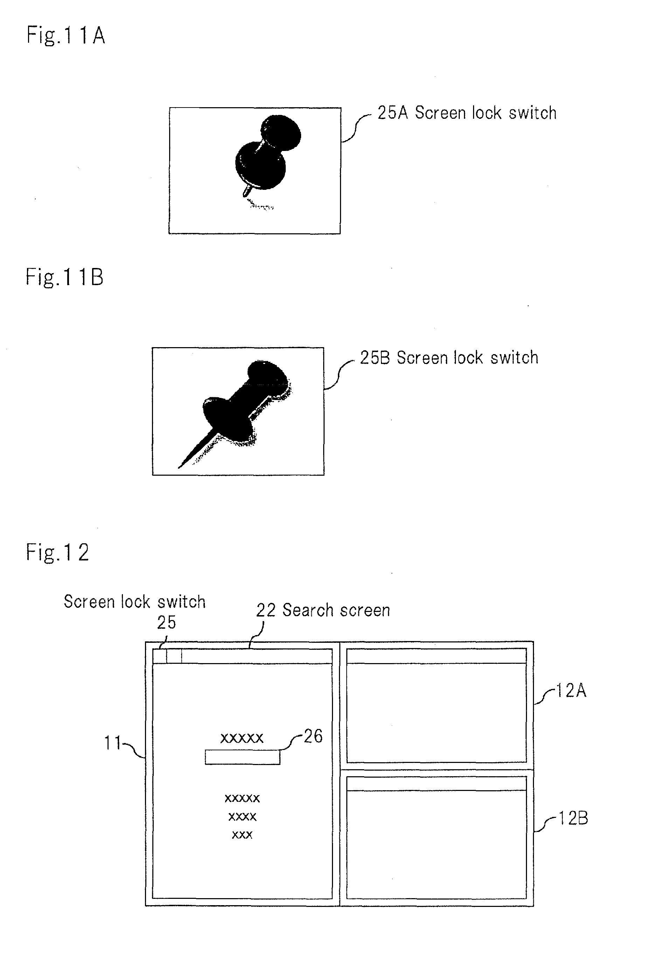

Figs. 11A and 11B are schematic diagrams showing examples of images of a screen lock switch. Fig. 11A shows screen lock switch 25A that appears when a browser screen has been locked. Fig. 11B shows screen lock switch 25B that appears when a browser screen has not been locked. In these examples, the images show that the user can visually recognize whether or not a browser screen has been locked.

As described above, according to this embodiment, a browser that effectively uses two displays 11 and 12 and that is highly convenient can be realized.

For example, if the user repeatedly makes searches with search conditions he or she can change, he or she can make a search on search screen 22 that appears on one display and that has been locked and while seeing search result screen 27 that appears on the other display, he or she can further make searches with search conditions he or she changes. Thus, if the user repeatedly make searches with changed search conditions, he or she does not need to perform an operation that returns to search screen 22.

On the other hand, if the user browses web page screen 28 corresponding to a plurality of links 29 that appear on search result screen 27, he or she can successively select links 29 that appear on one display and that has been locked while changing web pages that he or she browse corresponding to the links on the other display. Thus, if the user successively browses web pages corresponding to a plurality of links, he or she does not need to perform an operation that returns to search result screen 27.

On the other hand, if the user tracks links and browses web pages corresponding to the tracked links, he or she can lock a web page that appears on display 12, successively browse web pages corresponding to a plurality of links of the web page on display 12, lock one web page that he or she has browsed on display 12, and successively browse web pages corresponding to a plurality of links of the web page on display 11. Thus, if the user tracks links and browses a plurality of web pages corresponding to the links, he or she does not need to perform an operation that returns to the link source web page.

Information processing terminal 10 according to the foregoing embodiment is provided with two displays 11 and 12. If a browser screen that appears on one display is locked and an operation is performed on the browser screen, a new browser screen appears on the other display. However, it should be appreciated that the present invention is not limited to such a structure.

Information processing terminal 10 according to a second embodiment of the present invention is provided with three or more displays. Before a browser screen that appears on a display is locked and an operation is performed on the browser screen, control section 16 causes the user to preset one of other displays on which a new browser screen appears. Thus, if the user touches a browser screen that has been locked, control section 16 causes a new browser screen to appear on a display that he or she has preset.

Fig. 12 is a schematic diagram describing a structure and an operation of the information processing terminal according to the second embodiment. Although the information processing terminal according to the second embodiment is provided with three displays 11, 12A, and 12B, the other structure of the information processing terminal is basically the same as that of information processing terminal 10 according to the first embodiment shown in Figs. 1 and 2. Before a browser screen that appears on display 11 is locked and an operation is performed on the browser screen, control section 16 presets one of displays 12A or 12B for a display on which a new browser screen appears. At this point, control section 16 may change the color of screen lock switch 25A shown in Fig. 11A depending on the setting. For example, if search screen 22 that appears on display 11 has been locked and an operation is performed on search screen 22, a new browser screen appears on display 12A. In this case, screen lock switch 25A may appear in "red." If search screen 22 that appears on display 11 has been locked and an operation is performed on search screen 22, a new browser screen appears on display 12B. In this case, screen lock switch 25A may appear in "blue."

According to the second embodiment, a browser that is highly convenient compared with the first embodiment can be realized. For example, the user can browse and compare two web page screens 28 that appear on displays 12A and 12B corresponding to links 29 that appears on search result screen 27 that has been locked on display 11.

According to the foregoing first embodiment, when enclosures 13 and 14 are opened, the display surfaces of two displays 11 and 12 are located in the same direction such that they simultaneously enter the user's field of vision. However, it should be appreciated that the present invention is not limited to such a structure. As another example of the structure, the information processing terminal may be composed of a single planar enclosure. Two displays may be located on the front and rear surfaces of the enclosure. As another example of the structure, the information processing terminal may be composed of two enclosures closably and openably connected and displays are located on the front and rear surfaces of each of the enclosures. Thus, the information processing terminal may be provided with a total of four displays. The basic functional structure and operation of the present invention do not depend on the locations and number of displays.

With reference to the embodiments, the present invention has been described. However, it should be understood by those skilled in the art that the structure and details of the present invention may be changed in various manners without departing from the scope of the present invention.

The present application claims priority based on Japanese Patent Application JP 2011-000829 filed on January 5, 2011, the entire contents of which being incorporated herein by reference in its entirety.

### DESCRIPTION OF REFERENCE NUMERALS

- 10: Information processing terminal
- 11, 12, 12A, 12B: Display
- 13, 14: Enclosure
- 15: Display section
- 16: Control section
- 21: Background screen
- 22: Search screen
- 23: Favorite web page screen
- 24: Favorite web page icon
- 25, 25A, 25B: Screen lock switch
- 26: Input area
- 27: Search result screen
- 28: Web page screen
- 29: Link

## Claims

1. An information processing terminal, comprising:
a display section that has a plurality of displays; and
a control section that causes a first browser screen to appear on a first display of said display section and, if the first browser screen is locked and an operation is performed on the first browser screen, causes a second browser screen to appear on a second display of said display section.

2. The information processing terminal as set forth in claim 1,
wherein the number of displays of said display section is two and the displays are said first display and said second display, and
wherein if the browser screen that appears on said second display has been locked and the browser screen that appears on said first display is caused to be locked, said control section causes the browser screen that appears on said first display to be unlocked and the browser screen that appears on said second display to be locked.

3. The information processing terminal as set forth in claim 1 or claim 2,
wherein while the first browser screen that appears on said first display has been locked and the browser screen does not appear on said second display, if the operation is performed on said first browser screen, said control section causes said second browser screen to appear on said second display.

4. The information processing terminal as set forth in any one of claims 1 to 3,
wherein while the first browser screen that appears on said first display has been locked and the third browser screen that appears on said second display has not been locked, if the operation is performed on said first browser screen, said control section causes said third browser screen that appears on said second display to be switched to said second browser screen.

5. The information processing terminal as set forth in any one of claims 1 to 4,
wherein while one browser screen appears wholly on said displays, said control section does not cause the browser screen to be locked.

6. The information processing terminal as set forth in any one of claims 1 to 5,
wherein the number of displays of said display section is three or more, and
wherein said control section presets a display on which said second browser screen appears and when said first browser screen is locked and an operation is performed on said first browser screen, said control section causes said second browser screen to appear on the display that said control section has preset.

7. A control method of an information processing terminal having a plurality of displays, comprising:
causing a first browser screen to appear on a first display; and
if the first browser screen is locked and an operation is performed on the first browser screen, causing a second browser screen to appear on a second display.
